# EUROPEAN PATENT APPLICATION

(11) **EP 4 692 591 A1**
(43) Date of publication of application: **11.02.2026**
(21) Application number: 24780040.2
(22) Date of filing: 22.03.2024
(51) Int. Cl.: F16F 15/131, F16F 15/134

(54) **DAMPER DEVICE**

(30) Priority: 28.03.2023 JP 2023051279
(71) Applicant: AISIN CORPORATION, Kariya-shi, Aichi 448-8650 (JP)
(72) Inventor: KATAOKA, Naoya, Kariya-shi, Aichi 448-8650 (JP)
(74) Representative: Winter, Brandl - Partnerschaft mbB
(86) International application number: PCT/JP2024/011433
(87) International publication number: WO 2024/203922

(57) **Abstract**

A damper device includes: a first rotating body to which power is transmitted; a second rotating body that rotates with a first elastic mechanism interposed between the second rotating body and the first rotating body, the first elastic mechanism being disposed along a circumferential direction; and a third rotating body that rotates with a second elastic mechanism interposed between the third rotating body and the second rotating body, the second elastic mechanism being disposed along the circumferential direction and including an elastic member, a first seat supporting one end of the elastic member, and a second seat supporting the other end of the elastic member. Each of the first seat and the second seat is disposed between a first main surface of the second rotating body that extends in an intersecting direction intersecting the rotation axis and a second main surface of the third rotating body that extends in the intersecting direction. Each of the first seat and the second seat includes a protruding portion extending in the intersecting direction.

## Description

### TECHNICAL FIELD

The technique disclosed in the present application relates to damper devices.

### BACKGROUND ART

In a vehicle etc., a damper device that absorbs fluctuations in torque transmitted from a driving source such as an engine to a transmission is provided on a torque transmission path between the driving source and the transmission.

As an example of such a damper device, the damper device disclosed in Patent Document 1 is known in the art. The damper device described in Patent Document 1 includes: a disc plate to which power from a driving source is transmitted; a hub that rotates relative to the disc plate by expanding and contracting a first coil spring disposed between the hub and the disc plate; and a control plate that rotates relative to the hub by expanding and contracting a second coil spring disposed between the control plate and the hub and smaller than the first coil spring.

In the torsional characteristics of such a damper device, a low-rigidity region (pre-damper region) is formed by the second coil spring as a region where the torsion angle is close to zero, and a high-rigidity region is formed by the first coil spring and the second coil spring as a region where the torsion angle is large. Patent Document 1 is incorporated herein by reference in its entirety.

### Related Art Documents

### Patent Documents

Patent Document 1: Japanese Unexamined Patent Application Publication No. 2003-148512 (JP 2003-148512 A)

### SUMMARY OF THE INVENTION

### Problem to be Solved by the Invention

However, the damper device disclosed in Patent Document 1 adopts the configuration in which the second coil spring directly contacts other members including the hub and/or the control plate, which results in wear of the second coil spring and/or the other members.

Therefore, the technology disclosed in the present application can provide a damper device that at least partially reduces wear of members provided in association with an elastic member.

### Means for Solving the Problem

A damper device according to one aspect can "include: a first rotating body configured to receive power and rotate around a rotation axis; a second rotating body configured to rotate around the rotation axis with a first elastic mechanism interposed between the second rotating body and the first rotating body, the first elastic mechanism being disposed along a circumferential direction of the damper device; and a third rotating body configured to rotate around the rotation axis with a second elastic mechanism interposed between the third rotating body and the second rotating body, the second elastic mechanism being disposed along the circumferential direction and including an elastic member, a first seat that supports one end of the elastic member, and a second seat that supports the other end of the elastic member. The first rotating body is provided such that, when the first rotating body presses the first elastic mechanism, the second rotating body pressed by the first elastic mechanism rotates relative to the third rotating body while compressing the second elastic mechanism. The first rotating body is provided such that, when the first rotating body further presses the first elastic mechanism, the first rotating body rotates relative to the second rotating body and the third rotating body while compressing the first elastic mechanism between the first rotating body and the second rotating body contacting the first elastic mechanism. Each of the first seat and the second seat is disposed between a first main surface of the second rotating body that extends in an intersecting direction intersecting the rotation axis and a second main surface of the third rotating body that extends in the intersecting direction. Each of the first seat and the second seat includes a protruding portion that extends in the intersecting direction." In this aspect, the intersecting direction is a direction along a plane that intersects the rotation axis.

### Effects of the Invention

The technology disclosed in the present application can provide a damper device that at least partially reduces wear of members provided in association with an elastic member.

### BRIEF DESCRIPTION OF THE DRAWINGS

[FIG. 1] FIG. 1 is a perspective view schematically showing the configuration of a damper device according to an embodiment.
[FIG. 2] FIG. 2 is a top view schematically showing the configuration of the damper device in FIG. 1.
[FIG. 3] FIG. 3 is a perspective view schematically showing the configuration of the damper device in FIG. 1 with some members removed.
[FIG. 4] FIG. 4 is a top view schematically showing the configuration of the damper device in the state shown in FIG. 3.
[FIG. 5] FIG. 5 is a top view schematically showing the configuration of the damper device in FIG. 4 with some more members removed.
[FIG. 6] FIG. 6 is a top view schematically showing the configuration of the damper device in FIG. 2, with internal members shown in phantom.
[FIG. 7] FIG. 7 is an exploded perspective view schematically showing the configuration of the damper device in FIG. 1.
[FIG. 8] FIG. 8 is a sectional view schematically showing the configuration of the damper device in FIG. 1, taken along an irregular A-A' section shown in FIG. 6.
[FIG. 9] FIG. 9 is a perspective view schematically showing the configuration of a second elastic mechanism included in the damper device in FIG. 1.
[FIG. 10] FIG. 10 is a sectional view schematically showing the configuration of the damper device in FIG. 1, taken along an irregular B-C-D-E section shown in FIG. 6.

### MODES FOR CARRYING OUT THE INVENTION

Various embodiments will be described below with reference to the accompanying drawings. The same constituent elements are denoted by the same signs throughout the drawings. It should be noted that a constituent element that appears in a certain drawing may be omitted in another drawing for convenience of description. It should also be noted that the accompanying drawings are not necessarily drawn to scale.

### 1. Configuration of Damper Device

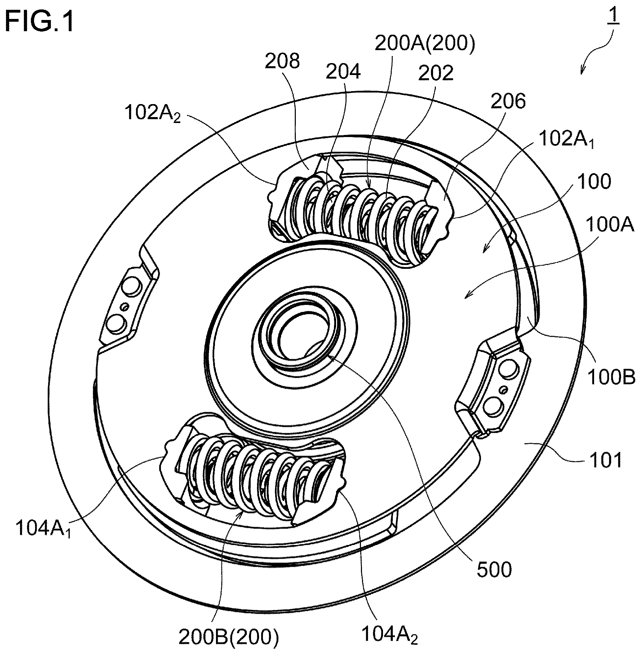

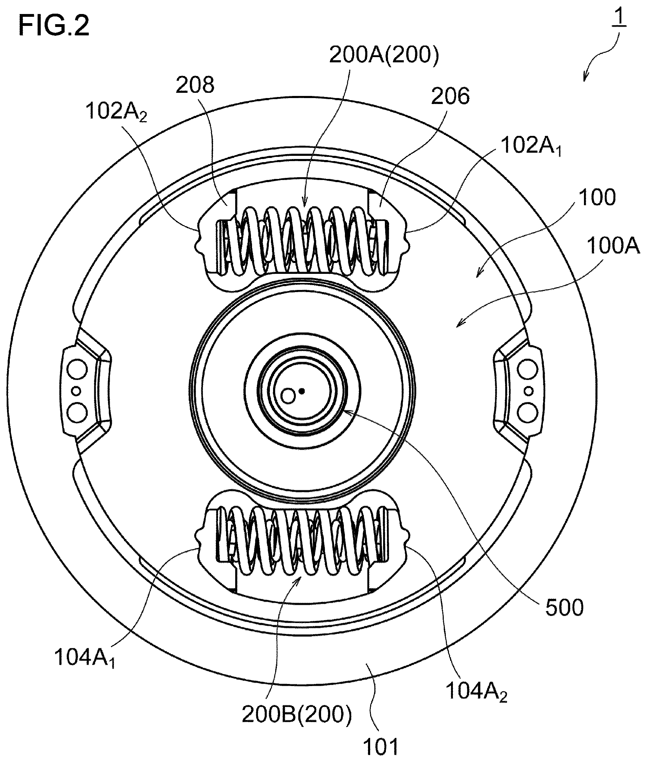

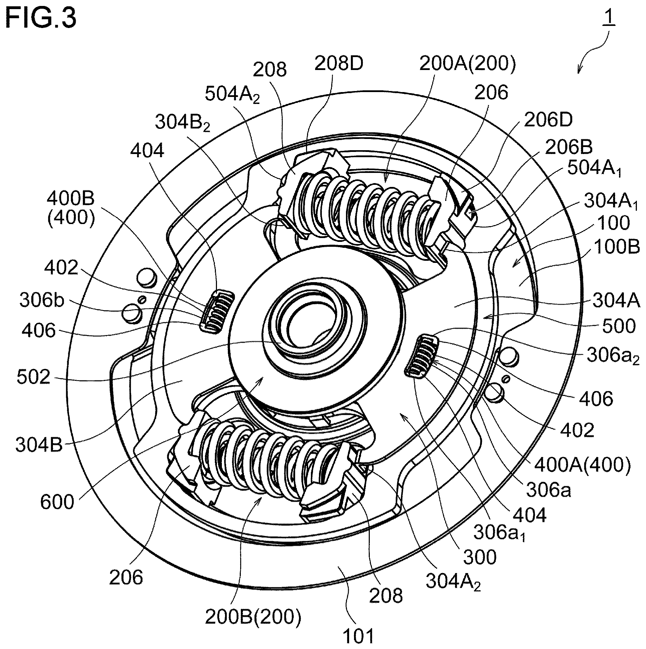

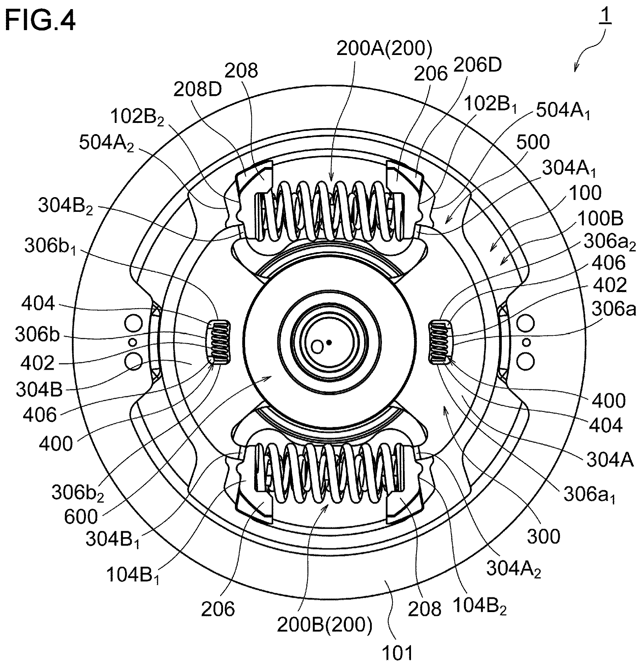

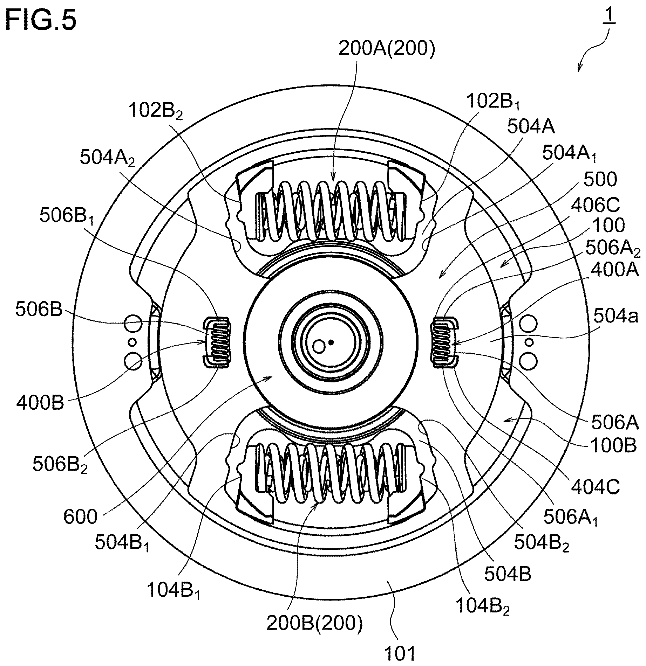

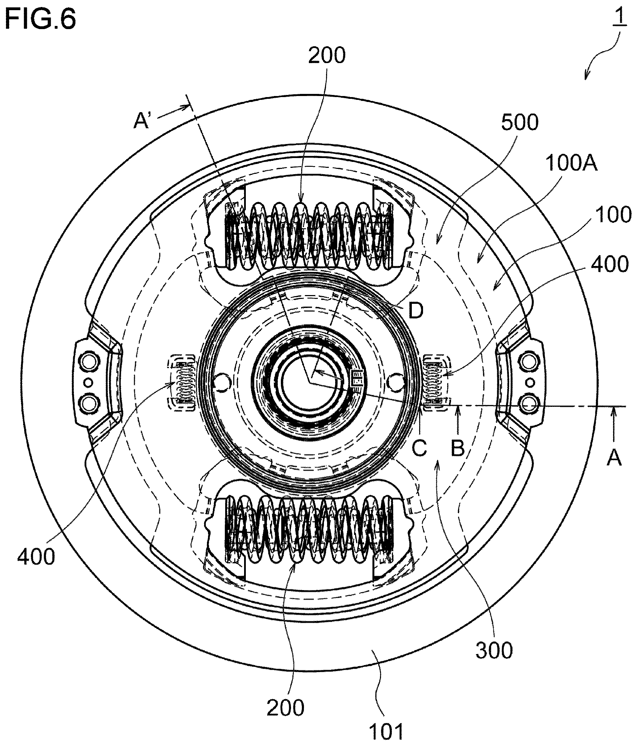

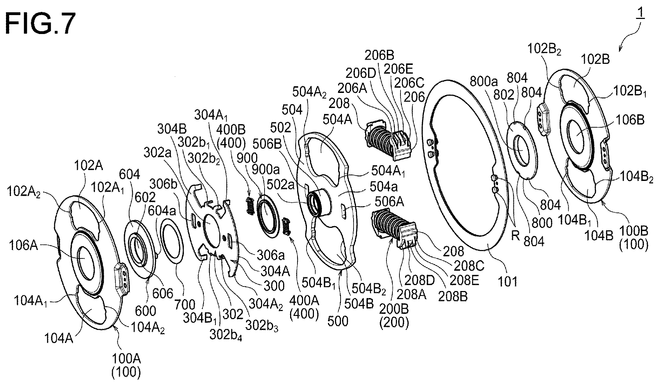

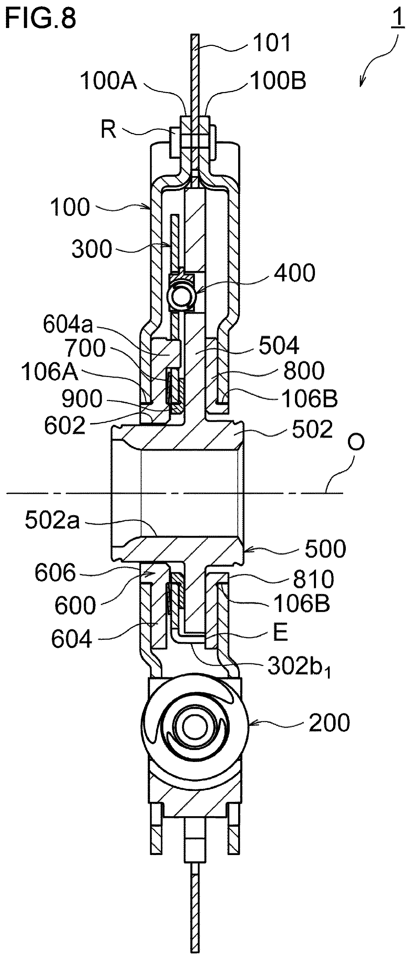

The overall configuration of a damper device according to an embodiment will be described with reference to FIGS. 1 to 8. FIG. 1 is a perspective view schematically showing the configuration of the damper device according to the embodiment. FIG. 2 is a top view schematically showing the configuration of the damper device in FIG. 1. FIG. 3 is a perspective view schematically showing the configuration of the damper device in FIG. 1 with some members removed. FIG. 4 is a top view schematically showing the configuration of the damper device in the state shown in FIG. 3. FIG. 5 is a top view schematically showing the configuration of the damper device in FIG. 4 with some more members removed. FIG. 6 is a top view schematically showing the configuration of the damper device in FIG. 2, with internal members shown in phantom. FIG. 7 is an exploded perspective view schematically showing the configuration of the damper device in FIG. 1. FIG. 8 is a sectional view schematically showing the configuration of the damper device in FIG. 1, taken along an irregular A-A' section shown in FIG. 6.

A damper device 1 may be a device that is provided between a driving source, not shown, such as an engine or a motor, and a transmission, not shown, and that receives power transmitted from the driving source and transmits (outputs) this power to the transmission.

The damper device 1 can roughly include: a disc plate 100 as a first rotating body to which power is transmitted; a control plate 300 as a second rotating body that rotates around a rotation axis O with a first elastic mechanism 200 interposed between the control plate 300 and the disc plate 100, the first elastic mechanism 200 being disposed along a circumferential direction; and a hub 500 as a third rotating body that rotates around the rotation axis O with a second elastic mechanism 400 interposed between the hub 500 and the control plate 300, the second elastic mechanism 400 being disposed along the circumferential direction.

In this specification, the "axial direction" refers to a direction extending parallel to the rotation axis O, the "radial direction" refers to a direction perpendicular to the rotation axis O, and the "circumferential direction" refers to a direction that revolves around the rotation axis O.

### (1) Disc Plate 100 (First Rotating Body)

The disc plate 100 may be disposed at the most upstream side in the damper device 1. The disc plate 100 may be made of, for example, a metal material such as stainless steel, steel, duralumin, or iron. As clearly shown in FIGS. 7 and 8, the disc plate 100 can include a first plate 100A and a second plate 100B each having a substantially disc shape. The first plate 100A and the second plate 100B may be arranged so as to sandwich a lining plate 101, the control plate 300, the hub 500, and the like therebetween. The first plate 100A and the second plate 100B may both be joined near their outer peripheries to the annular lining plate 101 by rivets R etc. The first plate 100A and the second plate 100B can thus rotate with the lining plate 101 around the rotation axis O.

Power from the driving source may be transmitted to the disc plate 100 via a flywheel (not shown) and the lining plate 101.

As clearly shown in FIGS. 1 to 7, the first plate 100A and the second plate 100B can support at least one (in this example, two) first elastic mechanism 200 so as to hold each of the first elastic mechanisms 200 from both sides in the circumferential direction. In order to implement this, the first plate 100A and the second plate 100B can include openings facing each other at each of the positions corresponding to the first elastic mechanisms 200. Specifically, as clearly shown in FIG. 7, the first plate 100A may include an opening 102A and the second plate 100B may include an opening 102B facing the opening 102A, at a position corresponding to a first elastic mechanism 200A. Similarly, the first plate 100A may include an opening 104A and the second plate 100B may include an opening 104B, at a position corresponding to a first elastic mechanism 200B.

In one example, the opening 102A of the first plate 100A and the opening 102B of the second plate 100B can have the same shape, and the opening 104A of the first plate 100A and the opening 104B of the second plate 100B can have the same shape.

The opening 102A (102B) can include, at its one end in the circumferential direction, a support surface 102A₁ (102B₁) that has a shape conforming to the outer surface of a first seat member 206, described later, of the first elastic mechanism 200A and that supports this outer surface from the outer side in the circumferential direction. The opening 102A (102B) can include, at the other end in the circumferential direction, a support surface 102A₂ (102B₂) that has a shape conforming to the outer surface of a second seat member 208, described later, of the first elastic mechanism 200A and that supports this outer surface from the outer side in the circumferential direction.

Similarly, the opening 104A (104B) can include, at its one end in the circumferential direction, a support surface 104A₁ (104B₁) that has a shape conforming to the outer surface of a first seat member 206, described later, of the first elastic mechanism 200B and that supports this outer surface from the outer side in the circumferential direction. The opening 104A (104B) can include, at the other end in the circumferential direction, a support surface 104A₂ (104B₂) that has a shape conforming to the outer surface of a second seat member 208, described later, of the first elastic mechanism 200B and that supports this outer surface from the outer side in the circumferential direction.

Moreover, as clearly shown in FIGS. 7 and 8, the first plate 100A and the second plate 100B can respectively include a through hole 106A and a through hole 106B through which a cylindrical portion 502 of the hub 500, described below, is inserted.

Such a disc plate 100 may be provided so as to be rotatable relative to the hub 500 via a sliding member 600 that can also serve as a bearing.

Specifically, as clearly shown in FIGS. 7 and 8, the sliding member 600 may generally have a substantially annular shape and may include a through hole 602 in the center. The sliding member 600 may include a base 604 having a substantially annular shape, and a projecting portion 606 also having a substantially annular shape, projecting from the base 604 in the axial direction, and having a smaller outer diameter than the base 604 (note that the sliding member 600 may be made of, for example, a material such as resin (nylon resin etc.), stainless steel, steel, duralumin, or iron). At least one protrusion 604a may be formed on the surface of the base 604 that faces the control plate 300. The protrusion 604a is fitted into the control plate 300. The sliding member 600 can thus rotate with the control plate 300.

The sliding member 600 may be provided so as to be rotatable relative to the hub 500 by inserting the cylindrical portion 502 of the hub 500, described later, through the through hole 602. The disc plate 100 may be provided so as to be rotatable relative to the hub 500 via the sliding member 600 by inserting the projecting portion 606 of the sliding member 600 through the through hole 106A of the first plate 100A.

### (2) Hub 500 (Third Rotating Body)

The hub 500 can serve as an output member that outputs the driving force of the damper device 1 to the outside. The hub 500 may be made of, for example, a metal material such as stainless steel, steel, duralumin, or iron. The hub 500 may be disposed between the first plate 100A and the second plate 100B of the disc plate 100 so as to be rotatable relative to the disc plate 100 and the control plate 300.

As clearly shown in FIGS. 7, 8, and 5, the hub 500 can include the cylindrical portion 502 and a plate portion 504 extending radially outward from the cylindrical portion 502 and having a deformed circular shape. The cylindrical portion 502 can be spline-coupled to an input shaft (not shown) of the transmission by inserting the input shaft through a through hole 502a extending in the axial direction. The cylindrical portion 502 can extend to the outside of the disc plate 100 through the through hole 106A and the through hole 106B of the disc plate 100.

The plate portion 504 can include, at each position corresponding to the at least one (in this example, two) first elastic mechanism 200, an opening that accommodates the first elastic mechanism 200. Specifically, in this example, the plate portion 504 can include, at a position corresponding to the first elastic mechanism 200A, an opening 504A that accommodates the first elastic mechanism 200A, and can include, at a position corresponding to the first elastic mechanism 200B, an opening 504B that accommodates the first elastic mechanism 200B. In one example, the opening 504A and the opening 504B can have the same shape.

As clearly shown in FIG. 5, the opening 504A can include a support surface 504A₁ having a shape conforming to the outer surface of the first seat member 206, described later, of the first elastic mechanism 200A. When the hub 500 rotates relative to the disc plate 100 (in the counterclockwise direction in the figure), the support surface 504A₁ can contact and support the outer surface of the first seat member 206 from the outer side in the circumferential direction. The opening 504A can include a support surface 504A₂ having a shape conforming to the outer surface of the second seat member 208, described later, of the first elastic mechanism 200A. When the hub 500 rotates relative to the disc plate 100 (in the clockwise direction in the figure), the support surface 504A₂ can contact and support the outer surface of the second seat member 208 from the outer side in the circumferential direction.

Similarly, the opening 504B can include a support surface 504B₁ having a shape conforming to the outer surface of the first seat member 206, described later, of the first elastic mechanism 200B. When the hub 500 rotates relative to the disc plate 100 (in the counterclockwise direction in the figure), the support surface 504B₁ can contact and support the outer surface of the first seat member 206 from the outer side in the circumferential direction. The opening 504B can include a support surface 504B₂ having a shape conforming to the outer surface of the second seat member 208, described later, of the first elastic mechanism 200B. When the hub 500 rotates relative to the disc plate 100 (in the clockwise direction in the figure), the support surface 504B₂ can contact and support the outer surface of the second seat member 208 from the outer side in the circumferential direction.

As clearly shown in FIGS. 7, 8, and 5, the plate portion 504 can include, at each position corresponding to at least one (in this example, two) second elastic mechanism 400, an opening that accommodates the second elastic mechanism 400. Specifically, in this example, the plate portion 504 can include, at a position corresponding to a second elastic mechanism 400A, an opening 506A that accommodates the second elastic mechanism 400A, and can include, at a position corresponding to the second elastic mechanism 400B, an opening 506B that accommodates the second elastic mechanism 400B. In one example, the opening 506A and the opening 506B can have the same shape.

As clearly shown in FIG. 5, the opening 506A can include, at its one end in the circumferential direction, a support surface 506A₁ that has a shape conforming to the outer surface of a first seat member 404, described later, of the second elastic mechanism 400A and that supports this outer surface from the outer side in the circumferential direction. The opening 506A can include, at the other end in the circumferential direction, a support surface 506A₂ that has a shape conforming to the outer surface of a second seat member 406, described later, of the second elastic mechanism 400A and that supports this outer surface from the outer side in the circumferential direction.

Similarly, the opening 506B can include, at its one end in the circumferential direction, a support surface 506B₁ that has a shape conforming to the outer surface of a first seat member 404, described later, of the second elastic mechanism 400B and that supports this outer surface from the outer side in the circumferential direction. The opening 506B can include, at the other end in the circumferential direction, a support surface 506B₂ that has a shape conforming to the outer surface of a second seat member 406, described later, of the second elastic mechanism 400B and that supports this outer surface from the outer side in the circumferential direction.

### (3) First Elastic Mechanism 200

The damper device 1 can include at least one first elastic mechanism 200. As an example, the damper device 1 can include two first elastic mechanisms 200A, 200B as described above.

In one example, the first elastic mechanisms 200 can have the same configuration. As shown in FIGS. 1 to 6, for example, each of the first elastic mechanisms 200 (200A, 200B) can include: a first elastic member 202 having a large outer diameter and extending helically along the circumferential direction; a second elastic member 204 having a small outer diameter and extending helically along the circumferential direction; the first seat member 206 disposed at one end of the first elastic member 202 (second elastic member 204) and supporting the first elastic member 202 (second elastic member 204) from the outer side in the circumferential direction; and the second seat member 208 disposed at the other end of the first elastic member 202 (second elastic member 204) and supporting the first elastic member 202 (second elastic member 204) from the outer side in the circumferential direction.

Of the two first elastic mechanisms 200A, 200B, only the first elastic mechanism 200A will be described herein, and description of the first elastic mechanism 200B having the same configuration as the first elastic mechanism 200A will be omitted.

The second elastic member 204 may be configured to be smaller in size than the first elastic member 202 and may be disposed inside the first elastic member 202. Both the first elastic member 202 and the second elastic member 204 may be made of a metal material such as steel or iron.

The first seat member 206 may generally have a substantially L-shaped cross-section. The first seat member 206 can contact, at its inner surface, the one end of the first elastic member 202 (second elastic member 204) and support the first elastic member 202 (second elastic member 204) from the outer side in the circumferential direction.

As clearly shown in FIG. 7, the first seat member 206 can include, on its outer surface, for example, three grooves (or engagement surfaces) 206A, 206B, 206C that extend substantially parallel to each other in the circumferential direction. The first seat member 206 can also include, on its outer surface, a projecting portion 206D that projects radially outward between the groove 206A and the groove 206B, and a projecting portion 206E that projects radially outward between the groove 206B and the groove 206C. The first seat member 206 may be made of a material such as resin, rubber, or metal.

Like the first seat member 206, the second seat member 208 may also generally have a substantially L-shaped cross-section. The second seat member 208 can contact, at its inner surface, the other end of the first elastic member 202 (second elastic member 204) and support the first elastic member 202 (second elastic member 204) from the outer side in the circumferential direction. The second seat member 208 may also be made of a material such as resin, rubber, or metal.

The second seat member 208 can include, on its outer surface, for example, three grooves (or engagement surfaces) 208A, 208B, 208C that extend substantially parallel to each other in the circumferential direction. The second seat member 208 can also include, on its outer surface, a projecting portion 208D that projects radially outward between the groove 208A and the groove 208B, and a projecting portion 208E that projects radially outward between the groove 208B and the groove 208C.

Focus will now be placed on the relationship between each of the first seat member 206 and the second seat member 208 and the disc plate 100.

As clearly shown in FIGS. 1, 2, and 7, the above-described support surface 102A₁ surrounding the opening 102A of the first plate 100A can contact the groove 206A formed in the outer surface of the first seat member 206 and support the groove 206A from the outer side in the circumferential direction. Similarly, the above-described support surface 102A₂ surrounding the opening 102A of the first plate 100A can contact the groove 208A formed in the outer surface of the second seat member 208 and support the groove 208A from the outer side in the circumferential direction.

As clearly shown in FIG. 7, the above-described support surface 102B₁ surrounding the opening 102B of the second plate 100B can contact the groove 206C formed in the outer surface of the first seat member 206 and support the groove 206C from the outer side in the circumferential direction. Similarly, the above-described support surface 102B₂ surrounding the opening 102B of the second plate 100B can contact the groove 208C formed in the outer surface of the second seat member 208 and support the groove 208C from the outer side in the circumferential direction.

Focus will now be placed on the relationship between each of the first seat member 206 and the second seat member 208 and the hub 500.

As clearly shown in FIGS. 3, 4, and 7, when the hub 500 rotates with the disc plate 100, the support surface 504A₁ surrounding the opening 504A formed in the hub 500 can face, at a distance, the groove 206B formed in the outer surface of the first seat member 206. When the hub 500 continues to rotate relative to the disc plate 100 (in the counterclockwise direction in FIGS. 3 and 4), the support surface 504A₁ can contact the groove 206B and presses the groove 206B.

When the hub 500 rotates with the disc plate 100, the support surface 504A₂ surrounding the opening 504A formed in the hub 500 can face, at a distance, the groove 208B formed in the outer surface of the second seat member 208. When the hub 500 continues to rotate relative to the disc plate 100 (in the clockwise direction in FIGS. 3 and 4), the support surface 504A₂ can contact the groove 208B and presses the groove 208B.

### (4) Second Elastic Mechanism 400

The damper device 1 can include at least one second elastic mechanism 400. As an example, the damper device 1 can include two second elastic mechanisms 400A, 400B as described above.

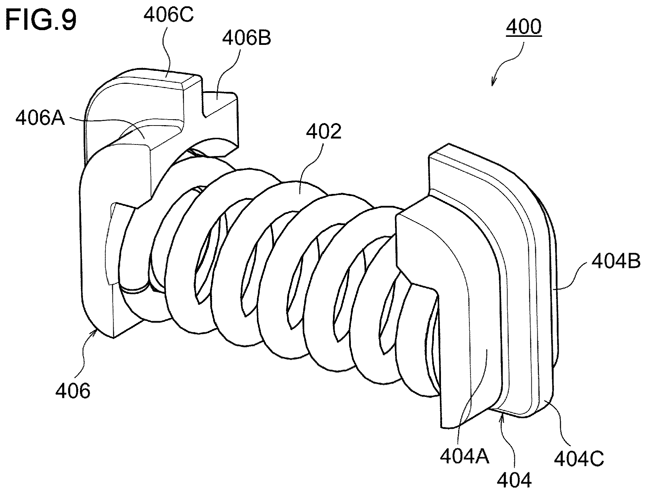

In one example, the second elastic mechanisms 400 can have the same configuration. The configuration of each second elastic mechanism 400 will further be described with reference to FIG. 9. FIG. 9 is a perspective view schematically showing the configuration of the second elastic mechanism included in the damper device in FIG. 1.

As shown in FIG. 9, for example, each second elastic mechanism 400 (400A, 400B) can include: an elastic member 402 extending helically along the circumferential direction; the first seat member 404 disposed at one end of the elastic member 402 and supporting the elastic member 402 from the outer side in the circumferential direction; and the second seat member 406 disposed at the other end of the elastic member 402 and supporting the elastic member 402 from the outer side in the circumferential direction.

Of the two second elastic mechanisms 400A, 400B, only the second elastic mechanism 400A will be described herein, and description of the second elastic mechanism 400B having the same configuration as the second elastic mechanism 400A will be omitted.

The elastic member 402 may be made of a metal material such as steel or iron.

The first seat member 404 may generally have a substantially L-shaped cross-section. The first seat member 404 can contact, at its inner surface, the one end of the elastic member 402 and support the elastic member 402 from the outer side in the circumferential direction.

The first seat member 404 can include, on its outer surface, for example, two engagement surfaces 404A, 404B that extend substantially parallel to each other. The first seat member 404 can also include, on its outer surface, a protruding portion 404C that protrudes and extends radially outward (in a direction intersecting or perpendicular to the rotation axis O) between the engagement surface 404A and the engagement surface 404B. Referring to FIGS. 8 and 7, the direction intersecting the rotation axis O in three-dimensional space can be understood as a direction along a plane intersecting the rotation axis O. One aspect of the plane intersecting the rotation axis O is a plane perpendicular to the rotation axis O. The first seat member 404 may be made of a material such as resin, rubber, or metal.

The protruding portion 404C can include, between a main surface 300a of the control plate 300, described later, and a main surface 504a of the hub 500, a portion extending in an intersecting direction that intersects the rotation axis O (e.g., a direction perpendicular to the rotation axis O), as long as the purpose of (at least partially) restricting axial movement and/or radial tilting of the first seat member 404 can be achieved. Referring to FIGS. 8 and 7, the intersecting direction in three-dimensional space can be understood as a direction along a plane intersecting the rotation axis O. The plane intersecting the rotation axis O is, for example, a plane perpendicular to the rotation axis O. This portion can extend in the circumferential direction and/or the radial direction. This portion can also extend radially outward and/or radially inward as viewed from the elastic member 402.

The second seat member 406 can include, on its outer surface, for example, two engagement surfaces 406A, 406B that extend substantially parallel to each other. The first seat member 406 can also include, on its outer surface, a protruding portion 406C that protrudes and extends radially outward (in a direction intersecting or perpendicular to the rotation axis O) between the engagement surface 406A and the engagement surface 406B. Referring to FIGS. 8 and 7, the direction intersecting the rotation axis O in three-dimensional space can be understood as a direction along a plane intersecting the rotation axis O. The plane intersecting the rotation axis O is, for example, a plane perpendicular to the rotation axis O. The second seat member 406 may also be made of a material such as resin, rubber, or metal.

The protruding portion 406C can include, between the main surface 300a of the control plate 300, described later, and the main surface 504a of the hub 500, a portion extending in an intersecting direction that intersects the rotation axis O (e.g., a direction perpendicular to the rotation axis O), as long as the purpose of (at least partially) restricting axial movement and/or radial tilting of the second seat member 406 can be achieved. Referring to FIGS. 8 and 7, the intersecting direction in three-dimensional space can be understood as a direction along a plane intersecting the rotation axis O. The plane intersecting the rotation axis O is, for example, a plane perpendicular to the rotation axis O. This portion can extend in the circumferential direction and/or the radial direction. This portion can also extend radially outward and/or radially inward as viewed from the elastic member 402.

As clearly shown in FIGS. 5 and 7, each second elastic mechanism 400 including such a configuration may be attached to and supported by the hub 500 (and may also be attached to and supported by the control plate 300, as described below).

Specifically, the engagement surface 404B of the first seat member 404 may be accommodated in the opening 506A of the hub 500 and supported from the outer side in the circumferential direction by the support surface 506A₁ surrounding the opening 506A. The engagement surface 406B of the second seat member 406 may be accommodated in the opening 506A of the hub 500 and supported from the outer side in the circumferential direction by the support surface 506A₂ surrounding the opening 506A.

The protruding portion 404C of the first seat member 404 and the protruding portion 406C of the second seat member 406 can be disposed and extend between the main surface 504a of the hub 500 (i.e., the surface 504a of the plate portion 504 that faces the control plate 300) and the main surface 300a of the control plate 300 described later (i.e., the surface 300a of the control plate 300 that faces the plate portion 504).

### (5) Control Plate 300 (Second Rotating Body)

As clearly shown in FIG. 7, the control plate 300 may be disposed between the first plate 100A of the disc plate 100 and the hub 500. The control plate 300 may be made of, for example, a metal material such as stainless steel, steel, duralumin, or iron.

As clearly shown in FIGS. 3, 4, and 7, the control plate 300 can include a central portion 302 having a substantially annular shape, and a plurality of outer portions 304 extending radially outward from the central portion 302 and having a substantially sector shape. In this example, since the damper device 1 includes two first elastic mechanisms 200 (200A, 200B), the control plate 300 can include two outer portions 304 (304A, 304B).

The central portion 302 can include, at its center, a through hole 302a through which the cylindrical portion 502 of the hub 500 is inserted.

The central portion 302 can also include, for example, a plurality of arms 302b at its outer periphery. As an example, the central portion 302 can include four arms 302b₁ to 302b₄. Each arm 302b can be in the form of, for example, a plate, and can extend in a direction intersecting the plane in which the central portion 302 extends (in this example, a direction substantially parallel to the rotation axis O, by way of example).

In a preferred example, the central portion 302 can include the arms 302b at its outer periphery. In another example, the central portion 302 can alternatively or additionally include a plurality of arms 302b at its inner periphery. Instead of the central portion 302 including the plurality of arms 302b, or in addition to the central portion 302 including the plurality of arms 302b, one of the outer portions 304 can include similar arms at its outer periphery and/or inner periphery.

The outer portion 304A can include at least one (in this example, one) contact portion 304A₁ near its outer periphery. The contact portion 304A₁ can extend in a direction intersecting the plane in which the outer portion 304A extends (in this example, a direction substantially parallel to the rotation axis O, by way of example). As clearly shown in FIGS. 3 and 4, the contact portion 304A₁ can contact the outer surface of the first seat member 206 from the outer side in the circumferential direction and support this outer surface.

The outer portion 304A can also include at least one (in this example, one) contact portion 304A₂ near its outer periphery at a position spaced apart from the above-described contact portion 304A₁ along the circumferential direction. The contact portion 304A₂ can extend in a direction intersecting the plane in which the outer portion 304A extends (in this example, a direction substantially parallel to the rotation axis O, by way of example). As clearly shown in FIGS. 3 and 4, the contact portion 304A₁ can contact the outer surface of the second seat member 208 from the outer side in the circumferential direction and support this outer surface.

The outer portion 304B can include at least one (in this example, one) contact portion 304B₁ near its outer periphery. The contact portion 304B₁ can extend in a direction intersecting the plane in which the outer portion 304B extends (in this example, a direction substantially parallel to the rotation axis O, by way of example). As clearly shown in FIGS. 3 and 4, the contact portion 304B₁ can contact the outer surface of the first seat member 206 from the outer side in the circumferential direction and support this outer surface.

The outer portion 304B can also include at least one (in this example, one) contact portion 304B₂ near its outer periphery at a position spaced apart from the above-described contact portion 304B₁ along the circumferential direction. The contact portion 304B₂ can extend in a direction intersecting the plane in which the outer portion 304B extends (in this example, a direction substantially parallel to the rotation axis O, by way of example). As clearly shown in FIGS. 3 and 4, the contact portion 304B₂ can contact the outer surface of the second seat member 208 from the outer side in the circumferential direction and support this outer surface.

As clearly shown in FIGS. 3, 4, and 7, the control plate 300 can also include openings 306 at each of the positions facing the second elastic mechanisms 400. In this example, the control plate 300 can include an opening 306a in the outer portion 304A, and can include an opening 306b in the outer portion 304B.

As clearly shown in FIGS. 3 and 4, the opening 306a can include, at its one end in the circumferential direction, a support surface 306a₁ that has a shape conforming to the outer surface of the first seat member 404 of the second elastic mechanism 400A and that supports this outer surface from the outer side in the circumferential direction. The opening 306a can include, at the other end in the circumferential direction, a support surface 306a₂ that has a shape conforming to the outer surface of the second seat member 406 of the second elastic mechanism 400A and that supports this outer surface from the outer side in the circumferential direction.

Similarly, the opening 306b can include, at its one end in the circumferential direction, a support surface 306b₁ that has a shape conforming to the outer surface of the first seat member 404 of the second elastic mechanism 400B and that supports this outer surface from the outer side in the circumferential direction. The opening 306b can include, at the other end in the circumferential direction, a support surface 306b₂ that has a shape conforming to the outer surface of the second seat member 406 of the second elastic mechanism 400B and that supports this outer surface from the outer side in the circumferential direction.

The control plate 300 is connected to the hub 500 via such second elastic mechanisms 400. Accordingly, the control plate 300 and the hub 500 can rotate relative to each other by compressing the elastic members 402 included in the second elastic mechanisms 400 along the circumferential direction.

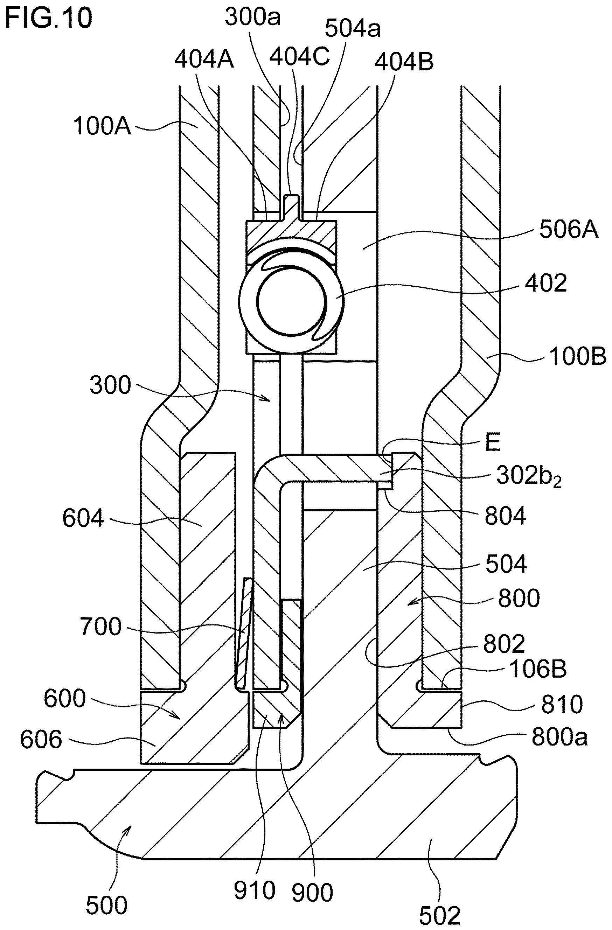

Focus will now be placed on how the control plate 300 including such a configuration is disposed in relation to other members in the damper device 1, with reference to FIG. 10 in addition to FIGS. 7 and 8. FIG. 10 is a sectional view schematically showing the configuration of the damper device in FIG. 1, taken along an irregular B-C-D-E section shown in FIG. 6.

The control plate 300 may be disposed between the hub 500 and the sliding member 600 that is provided so as to be rotatable relative to the first plate 100A of the disc plate 100. The control plate 300 is fitted onto the protrusion 604a formed on the base 604 of the sliding member 600, and can thus rotate with the sliding member 600. A disc spring 700 having a substantially annular shape may be disposed between the sliding member 600 and the control plate 300 (the central portion 302). Providing the disc spring 700 can reduce the axial gap between the members and/or can provide sliding resistance to rotation of the damper device and reduce resonance.
When relative rotation occurs between the control plate 300 and sliding member 600 and the disc plate 100, sliding torque can be generated between the sliding member 600 and the first plate 100A of the disc plate 100.

In addition, a sliding member (second annular member) 800 that may have a substantially annular shape may be disposed between the hub 500 (plate portion 504) and the second plate 100B. The sliding member 800 may be provided with the hub 500 interposed between the sliding member 800 and the control plate 300. The tubular member 502 of the hub 500 can be inserted through a through hole 800a formed in the center of the sliding member 800. The sliding member 800 can include a substantially annular projecting portion 810 that projects in the axial direction. The projecting portion 810 may be inserted into the through hole 106B formed in the second plate 100B. When the hub 500 and the disc plate 100 rotate relative to each other, sliding torque may be generated between the hub 500 and the disc plate 100. The sliding member 800 can be made of a material such as resin or rubber.

An end E of each arm 302b (in this example, arms 302b₁ to 302b₄) provided on the control plate 300 can pass through the hub 500 (e.g., through the inside of the opening 504A or 504B formed in the hub 500) and contact the sliding member 800. By providing the arms 302b in this manner, the distance between the main surface 300a of the control plate 300 (the surface of the control plate 300 that faces the plate portion 504) and a surface 802 of the sliding member 800 that faces the control plate 300 (or the plate portion 504) can be maintained at a predetermined distance or more. The predetermined distance is determined by the length of the arms 302b, and may be set to, for example, a value greater than the sum of the thickness of the plate portion 504 and the thickness of the protruding portion 404C. A fixed distance may thus be maintained between the control plate 300 and the plate portion 504 of the hub 500. That is, a fixed distance may be maintained between the main surface 300a of the control plate 300 (the surface of the control plate 300 that faces the plate portion 504) and the main surface 504a of the hub 500 (the surface of the hub 500 that faces the control plate 300). The specific distance may be greater than the axial thickness of the protruding portion 404C. This may reduce wear of the protruding portion 404C caused by the protruding portion 404C simultaneously contacting both the main surface 300a of the control plate 300 and the main surface 504a of the hub 500 (note that the protruding portion 404C may be allowed to be tilted and contact only one of the main surface 300a of the control plate 300 and the main surface 504a of the hub 500).

In a preferred example, the ends E of the arms 302b (302b₁ to 302b₄) can be fitted into grooves or holes 804 formed in the surface 802 of the sliding member 800 that faces the control plate 300. This allows the control plate 300 and the sliding member 800 to rotate together. In this case, the end E of each arm 302b does not rotate relative to the sliding member 800, which can reduce generation of friction between the end E of each arm 302b and the sliding member 800. This can reduce wear of the ends E of the arms 302b. The fixed distance can thus be maintained (secured) between the main surface 300a of the control plate 300 and the main surface 504a of the hub 500.

A washer (first annular member) 900 that may have a substantially annular shape may be disposed between the control plate 300 and the plate portion 504 of the hub 500. The tubular member 502 of the hub 500 can be inserted through a through hole 900a formed in the center of the washer 900. The washer 900 can include a substantially annular projecting portion 910 that projects in the axial direction. The projecting portion 910 can be inserted into a through hole 302a formed in the control plate 300. The washer 900 may be made of a material such as resin or rubber.

By providing the washer 900 in this manner, a fixed distance can be maintained (secured) between the main surface 300a of the control plate 300 and the main surface 504a of the hub 500. That is, the fixed distance may be maintained between the main surface 300a of the control plate 300 and the main surface 504a of the hub 500. This may reduce wear of the protruding portion 404C caused by the protruding portion 404C simultaneously contacting both the main surface 300a of the control plate 300 and the main surface 504a of the hub 500 (note that the protruding portion 404C may be allowed to be tilted and contact only one of the main surface 300a of the control plate 300 and the main surface 504a of the hub 500).

In a preferred example, the axial thickness of the washer 900 disposed between the main surface 300a of the control plate 300 and the main surface 504a of the hub 500 may be greater than the axial thickness of the protruding portion 404C. With this configuration, the fixed distance may be maintained between the main surface 300a of the control plate 300 and the main surface 504a of the hub 500, even when the ends E of the arms 302b rotate relative to the sliding member 800 and becomes shorter due to wear, or even when the arms 302b are not provided.

The relationship (configuration and effect) between the protruding portion 404C included in the first seat member 404 and the main surface 300a of the control plate 300 (the main surface 504a of the hub 500) as described above also applies to the relationship between the protruding portion 406C included in the second seat member 406 and the main surface 300a of the control plate 300 (the main surface 504a of the hub 500).

### 2. Operation of Damper Device

An example of the operation that is performed by the damper device 1 including the above configuration will be described.
Referring to FIG. 2, it is herein assumed that a driving force is transmitted from the driving source (not shown) to cause the disc plate 100 to rotate in the counterclockwise direction in the figure. When the disc plate 100 starts to rotate in the counterclockwise direction, the driving force may be transmitted to the second seat member 208 via the support surface 102A₁, the first seat member 206, and the first elastic member 202 (the second elastic member 204). As can be seen from FIG. 4, the second seat member 208 to which the driving force has been transmitted can press the contact portion 304B₂ of the control plate 300 in the counterclockwise direction. When the contact portion 304B₂ is pressed, the control plate 300 can compress the elastic member 402 and rotate relative to the hub 500 in the counterclockwise direction (this may generate a low-rigidity region, i.e., a pre-damper region, between the control plate 300 and the elastic member 402).

The outer surface of the second seat member 208 can then contact the support surface 504A₂ surrounding the opening 504A of the hub 500. As a result, the hub 500 pressed by the outer surface of the second seat member 208 can also rotate in the counterclockwise direction. As the disc plate 100 further continues to rotate in the counterclockwise direction, the support surfaces 102A₁, 102B₁ of the rotating disc plate 100 can compress the first elastic member 202 (the second elastic member 204) between each support surface 102A₁, 102B₁ and the support surface 504A₂ of the hub 500 and rotate relative to the hub 500 in the counterclockwise direction. As time further elapses, the amount of deflection of the first elastic member 202 (the second elastic member 204) may change in accordance with variation in torque between the disc plate 100 and the hub 500. For example, when the torque transmitted to the disc plate 100 is greater than the torque transmitted to the hub 500, the disc plate 100 can rotate relative to the hub 500 in the counterclockwise direction while deflecting the first elastic member 202 (the second elastic member 204) to a relatively large extent between the disc plate 100 and the hub 500. On the other hand, when the torque transmitted to the disc plate 100 is smaller than the torque transmitted to the hub 500, the disc plate 100 can rotate relative to the hub 500 in the clockwise direction while deflecting the first elastic member 202 (the second elastic member 204) to a relatively small extent between the disc plate 100 and the hub 500.
Although only the first elastic mechanism 200A and its associated members have been described herein, the same operation is performed in parallel on the second elastic mechanism 200B and its associated members.

In this manner, the driving force transmitted from the driving source to the disc plate 100 may be eventually transmitted to the transmission (not shown) via the hub 500.

When the damper device 1 is rotating in the state shown in FIG. 4, the hub 500 may rotate relative to the disc plate 100 in the clockwise direction due to some factor (such as deceleration). Focusing on this case, in the state shown in FIG. 4, the hub 500 can first compress the elastic member 402 and rotate relative to the control plate 300 in the clockwise direction. Due to the clockwise rotation, the support surface 504A₂ of the hub 500 can then contact the outer surface of the second seat member 208. The second seat member 208 pressed by the support surface 504A₂ of the hub 500 rotating in the clockwise direction can compress the first elastic member 202 (the second elastic member 204) between the second seat member 208 and the first seat member 206 supported by the support surfaces 102A₁, 102B₁ of the disc plate 100 rotating relative to the hub 500 in the counterclockwise direction.

When the aforementioned some factor is eliminated, the first elastic member 202 (the second elastic member 204) extends to return to its original shape, which allows the second seat member 208 to press the support surface 504A₂ of the hub 500 in the counterclockwise direction. As a result, the hub 500 can rotate relative to the disc plate 100 in the counterclockwise direction. Thereafter, the elastic member 402 extends to return to its original shape. As a result, the hub 500 can rotate relative to the control plate 300 in the counterclockwise direction. As time further elapses, the disc plate 100, the control plate 300, and the hub 500 can rotate together (in the state shown in FIG. 4). Although only the first elastic mechanism 200A and its associated members have been described herein, the same operation is performed in parallel on the second elastic mechanism 200B and its associated members.

By repeating such an operation, the elastic member 402 will repeatedly compress and expands (undergoes compression and expansion). Even during such an operation, as described above with reference to FIG. 10 etc., the fixed distance (preferably, a distance greater than the axial thickness of the protruding portions 404C, 406C) can be maintained or secured along the axial direction between the main surface 300a of the control plate 300 and the main surface 504a of the hub 500.

Specifically, the fixed distance can be maintained or secured between the main surface 300a of the control plate 300 and the main surface 504a of the hub 500 such that a first axial clearance is formed between the surface (radially extending surface) of the protruding portion 404C (406C) that faces the main surface 300a and the main surface 300a of the control plate 300, and a second axial clearance is formed between the surface (radially extending surface) of the protruding portion 404C (406C) that faces the main surface 504a and the main surface 504a of the hub 500.

This may reduce wear of the protruding portion 404C (406C) caused by the protruding portion 404C (406C) simultaneously contacting both the main surface 300a of the control plate 300 and the main surface 504a of the hub 500. As a result, the durability of the protruding portion 404C (406C) and the first seat member 404 (the second seat member 406) including the protruding portion 404C (406C) can be improved, and therefore, the damping performance provided by the second elastic mechanism 400 can be improved.

Focusing on the elastic member 402 supported from the outer side in the circumferential by the protruding portions 404C, 406C, the presence of these protruding portions allows the elastic member 402 to (at least partially) avoid contact with other members such as the control plate 300 and the hub 500. Therefore, it is also possible to reduce wear of the elastic member 402 itself caused by contact with other members.

### 3. Modifications

The various examples described above illustrate the case where the arms 302b (of the control plate 300) and the sliding member 800 are provided as a set, and instead of or in addition to this, the washer 900 is provided, in order to secure the fixed distance between the main surface 300a of the control plate 300 and the main surface 504a of the hub 500 in the axial direction.

However, these means are not essential elements in the technology disclosed in the present application, and may be provided as optional elements. Even when the arms 302b, the sliding member 800, and the washer 900 are not provided, the protruding portions 404C, 406C still extend between the main surface 300a of the control plate 300 and the main surface 504a of the hub 500. It is therefore possible to (at least partially) restrict axial movement and/or radial tilting of the first seat member 404 and the second seat member 406. Moreover, even in this case, the elastic member 402 can (at least partially) avoid contact with other members such as the control plate 300 and the hub 500 due to the presence of the protruding portions 404C, 406C. Therefore, it is also possible to reduce wear of the elastic member 402 itself caused by contact with other members.

The above example in which the arms 302b are provided illustrates the case where the arms 302b are provided on the control plate 300. In another example, instead of or in addition to this, a configuration can be adopted in which similar arms provided on the sliding member 800 contact, or are fitted in, the control plate 300.

The various examples described above illustrate the case where a protruding portion having the above-described configuration is provided on each of the first seat members 404 and the second seat members 406 of the second elastic mechanisms 400A, 400B included in the second elastic mechanism 400. In another example, a protruding portion having the above-described configuration can be provided on at least one second elastic mechanism included in the second elastic mechanism 400. In this case, a protruding portion having the above-described configuration can be provided on the first seat member 404 and/or the second seat member 406.

As will be readily understood by those skilled in the art who benefit from the present disclosure, the various examples described above may be appropriately combined in various patterns unless contradictions arise.

### 4. Various Aspects

A damper device according to a first aspect can adopt the following configuration. "The damper device includes: a first rotating body configured to receive power and rotate around a rotation axis; a second rotating body configured to rotate around the rotation axis with a first elastic mechanism interposed between the second rotating body and the first rotating body, the first elastic mechanism being disposed along a circumferential direction of the damper device; and a third rotating body configured to rotate around the rotation axis with a second elastic mechanism interposed between the third rotating body and the second rotating body, the second elastic mechanism being disposed along the circumferential direction and including an elastic member, a first seat that supports one end of the elastic member, and a second seat that supports the other end of the elastic member. The first rotating body is provided such that, when the first rotating body presses the first elastic mechanism, the second rotating body pressed by the first elastic mechanism rotates relative to the third rotating body while compressing the second elastic mechanism. The first rotating body is provided such that, when the first rotating body further presses the first elastic mechanism, the first rotating body rotates relative to the second rotating body and the third rotating body while compressing the first elastic mechanism between the first rotating body and the second rotating body contacting the first elastic mechanism. Each of the first seat and the second seat is disposed between a first main surface of the second rotating body that extends in an intersecting direction intersecting the rotation axis and a second main surface of the third rotating body that extends in the intersecting direction. Each of the first seat and the second seat includes a protruding portion that extends in the intersecting direction." In this aspect, the intersecting direction is a direction along a plane intersecting the rotation axis.

A damper device according to a second aspect can adopt the following configuration in the first aspect. "The protruding portion is provided such that a first clearance is provided between the protruding portion and the first main surface of the second rotating body, and/or the protruding portion is provided such that a second clearance is provided between the protruding portion and the second main surface of the third rotating body."

A damper device according to a third aspect can adopt the following configuration in the second aspect. "The damper device further include a first annular member provided between the second rotating body and the third rotating body. The first clearance and/or the second clearance is provided by the first annular member separating the first main surface and the second main surface."

A damper device according to a fourth aspect can adopt the following configuration in the first aspect. "The damper device further includes a second annular member provided with the third rotating member interposed between the second annular member and the second rotating member. The second rotating body includes an arm that passes through the third rotating body and contacts the second annular member. The first clearance and/or the second clearance is provided by the arm maintaining a predetermined distance or more between the first main surface and the annular member."

A damper device according to a fifth aspect can adopt the following configuration in the fourth aspect. "The arm is fitted in the second annular member to allow the second rotating body and the second annular member to rotate together."

A damper device according to a sixth aspect can adopt the following configuration in the fourth or fifth aspect. "The damper device further includes a first annular member provided between the second rotating body and the third rotating body. The first clearance and/or the second clearance is provided by the first annular member separating the first main surface and the second main surface." For example, the configuration can be adopted in the fourth aspect. "The first clearance and/or the second clearance is maintained by the first annular member separating the first main surface and the second main surface."

A damper device according to a seventh aspect can adopt the following configuration in the first to sixth aspects. "The protruding portion includes a surface that faces the first main surface and the first clearance is located between the surface and the first main surface, and/or the protruding portion includes a surface that faces the second main surface and the second clearance is located between the surface and the second main surface."

A damper device according to an eighth aspect can adopt the following configuration in the first to seventh aspects. "The protruding portion extends outward and/or inward in a radial direction of the elastic member."

As described above, the technology disclosed in the present application can provide a damper device that at least partially reduces wear of members provided in association with an elastic member.

The present application is based on Japanese Patent Application No. 2023-051279 filed on March 28, 2023 entitled "Damper Device," and claims the benefit of priority from this Japanese patent application. This Japanese Patent Application is incorporated herein by reference in its entirety.

### Description of the Reference Numerals

1 damper device
O rotation axis
100 disc plate
100A first plate
100Bsecond plate
200 (200A, 200B) first elastic mechanism
300 control plate
300a main surface (first main surface)
302b (302b₁, 302b₂, 302b₃, 302b₄) arm
E end of arm
400 second elastic mechanism
402 elastic member
404 first seat member (first seat)
406 second seat member (second seat)
404C, 406C protruding portion
500 hub
502 tubular member
504 plate portion
504a main surface (second main surface)
600 sliding member
700 disc spring
800 sliding member (second annular member)
804 groove or hole
900 washer (first annular member)

## Claims

1. A damper device **characterized by** comprising:
a first rotating body configured to receive power and rotate around a rotation axis;
a second rotating body configured to rotate around the rotation axis with a first elastic mechanism interposed between the second rotating body and the first rotating body, the first elastic mechanism being disposed along a circumferential direction of the damper device; and
a third rotating body configured to rotate around the rotation axis with a second elastic mechanism interposed between the third rotating body and the second rotating body, the second elastic mechanism being disposed along the circumferential direction, wherein:
when the first rotating body presses the first elastic mechanism, the first elastic mechanism presses the second rotating body, and the second rotating body rotates relative to the third rotating body while compressing the second elastic mechanism;
when the first rotating body further presses the first elastic mechanism, the second rotating body contacts the first elastic mechanism;
when the first rotating body further presses the first elastic mechanism, the first rotating body rotates relative to the second rotating body and the third rotating body while compressing the first elastic mechanism;
the second elastic mechanism includes an elastic member, a first seat that supports one end of the elastic member, and a second seat that supports another end of the elastic member; and
each of the first seat and the second seat is disposed between a first main surface of the second rotating body that extends in a direction along a plane intersecting the rotation axis and a second main surface of the third rotating body that extends in the direction along the plane intersecting the rotation axis, and each of the first seat and the second seat includes a protruding portion that extends in the direction along the plane intersecting the rotation axis.

2. The damper device according to claim 1, further comprising an annular member provided with the third rotating body interposed between the annular member and the second rotating body, wherein:
the second rotating body includes an arm that passes through the third rotating body and contacts the annular member;
a first clearance and/or a second clearance is provided by the arm maintaining a predetermined distance or more between the first main surface and the annular member;
the first clearance is a clearance between the protruding portion and the first main surface; and
the second clearance is a clearance between the protruding portion and the second main surface.

3. The damper device according to claim 2, wherein the arm is fitted in the annular member to allow the second rotating body and the annular member to rotate together.

4. The damper device according to claim 2 or 3, further comprising another annular member provided between the second rotating body and the third rotating body, wherein
the first clearance and/or the second clearance is maintained by the other annular member separating the first main surface and the second main surface.

5. The damper device according to claim 1, further comprising an annular member provided between the second rotating body and the third rotating body, wherein:
a first clearance and/or a second clearance is provided by the annular member separating the first main surface and the second main surface;
the first clearance is a clearance between the protruding portion and the first main surface; and
the second clearance is a clearance between the protruding portion and the second main surface.

6. The damper device according to any one of claims 2 to 5, wherein:
the protruding portion includes a surface that faces the first main surface, and the first clearance is located between the surface and the first main surface; and/or
the protruding portion includes a surface that faces the second main surface, and the second clearance is located between the surface and the second main surface.

7. The damper device according to any one of claims 1 to 6, wherein the protruding portion extends outward and/or inward in a radial direction of the elastic member.
